# EUROPEAN PATENT SPECIFICATION

(11) **EP 2 645 054 B1**
(45) Date of publication and mention of the grant of the patent: **15.08.2018**
(21) Application number: 11843409.1
(22) Date of filing: 25.11.2011
(51) Int. Cl.: G01B 11/10, G01B 11/24

(54) **LIGHT SOURCE APPARATUS FOR DIAMETER-MEASURING INSTRUMENT**
LICHTQUELLENVORRICHTUNG FÜR DURCHMESSERMESSINSTRUMENT
APPAREIL DU TYPE SOURCE LUMINEUSE POUR UN INSTRUMENT DE MESURE DE DIAMÈTRE

(30) Priority: 27.11.2010 CN 201010562691
(43) Date of publication of application: 02.10.2013
(73) Proprietor: Hefei Baisheng Science & Technology Co., Ltd., Anhui 230088 (CN)
(72) Inventor: LOU, Ting, Anhui 230088 (CN)
(74) Representative: Bergenstråhle Group AB
(86) International application number: PCT/CN2011/082959
(87) International publication number: WO 2012/069013

(56) References cited:
- CN-A- 102 168 949
- CN-A- 102 207 376
- CN-U- 201 892 778
- CN-U- 201 909 617
- CN-U- 202 002 616
- CN-Y- 201 173 769
- DE-A1-102007 017 747
- JP-A- 10 089 927
- US-A- 3 749 500
- US-A- 3 749 500
- US-A1- 2002 001 091
- RU ET AL: "Measurement of dimension in wire rod mill-application of non-contacting measurement techniques", TIANJIN YEJIN = TIANJIN METALLURGY, TIANJIN SHI JINSHU XUEHUI, CN, no. 4, 1 January 2001 (2001-01-01), pages 9-15, XP008169968, ISSN: 1006-110X
- RU, JIXIN.: 'Measurement of dimension in wire rod mill-application of non-contacting measurement techniques' TIANJIN METALLURGY no. 4, 2001, pages 9 - 15, XP008169968

## Description

### Technical field

The present invention relates to dynamic measurement technique and, more particularly, to the diameter measuring instrument for performing online real-time measurements on rod wire materials during the rod wire rolling process in the metallurgy industry.

### Background art

Up to now, rod wire online measurement is still a difficult problem in the metallurgy industry. At present there are related measuring instruments for rod wire such as screw-thread steel and round steel, for example, the related diameter measuring instrument provided by Tian Jin Zhao Rui Measuring Technology Co., Ltd. is a non-contact online measuring instrument, relevant technical contents are recorded in their patents, named "high precision dustproof diameter measuring instrument" (ZL200520123889), "stationary measuring head wire rod/bar diameter measuring instrument"(ZL200520123887.X) and "radially adjustable diameter measuring instrument" (ZL200520123888.4), etc. In the technical solutions described above, the following is provided: a rack comprising of a holder and a main disc body, a light source and a corresponding camera, i.e. so-called detector assembly provided on the rack, a plurality of the light sources and corresponding camera units radially correspondingly disposed and circumferentially uniformly arranged, a through-hole provided on the rack for the wire rod to pass through, thus actualizing camera apparatus for rod wire. The basic structure of the above technical solutions pertain to fixed rack, which means the rack can only carry out displacement adjustment in horizontal and vertical direction within a small scope, and the rack is hold stationary after adjustment and surely the light source and the corresponding camera are also stationary in measuring. The major defects residing in the above solutions are as follows: 1. a plurality of units of light sources and cameras are required to be uniformly disposed, even the more the units, the more accurate the measurement, but which is actually hard to actualize, thus the measuring accuracy of the above stationary diameter measuring apparatus is surely low; the number of the detector given by the embodiment is at least 7, which inevitably increases the cost of the optical elements remarkably and brings difficulty to wiring; meanwhile, adopting a method of scroll wheel supporting makes it hard to maintain in position when disposed in a rolling plant, because the vibration from the manufacturing department is very intense, making the wheel readily to displace and the measuring unable to carry out as long as there is merely little displacement or jitter.

In addition to the multiple-camera measuring systems mentioned above, there are also single-camera or dual-camera systems in the prior arts.

Review article "Measurement of Dimension in Wire Rod Mill-Application of Non-contacting Measurement Techniques" (Ru Jixin, Tianjin Metallurgy, Metallurgy Society of Tianjin City, China, Issue No. 4, 1 January 2001, Pages 9-15, XP008169968, ISSN: 1006-110X) discloses several non-contacting measuring techniques for measurement of dimensions in wire rod mill. This article mainly focuses on a series of IPL (Integrated Photomatrix Limited) ORBIS measuring products, and introduces the working principles and structures thereof. In a typical dual-camera system, two light beams from two halogen lamps are respectively collimated by two collimating lenses, then the two collimated beams are projected to the wire rod material to be measured, after being processed by two optical lenses the two beams are received by two cameras.

US3749500A discloses an optical caliper and edge detector-follower for automatic gaging. In the optical system of the automatic optical caliper, source light beams derived from a single light source are bent several times by pentaprisms, after being further processed by beam splitters and pentaprisms, four beams are generated and projected to the edges of the workpiece to be measured, after being reflected by mirrors, the four beams are received by photodetectors.

DE102007017747A1 discloses a method and device for optically measuring external thread profiles, particularly at the ends of pipes. In the device, the thread of a pipe is illuminated by illuminations and scanned in tangential relationship to the pipe cross section and the image of the thread contour is captured by cameras.

### Summary of invention

An object of the present invention is to provide a light source apparatus of a diameter measuring instrument, supplying stable light sources to enhance measuring reliability and accuracy, meanwhile ensuring providing beam in size of the illuminated region, within limited amount of space, to meet the requirement of measuring wire rod material to be measured of various standards.

The objective according to the invention is achieved by an apparatus comprising the features of claim 1. The dependent claims further develop the idea of the present invention.

It can be known from the above technical solution that the measuring provided by the present invention pertains to dynamic measuring, so the light sources maintain stable parallel beams and rotate about the wire rod material to apply comprehensive irradiation over the overall peripheral contour thereof, so all the information about the wire rod material to be measured can be acquired on the imaging apparatus, with complete size information thereof, thus providing basic insurance for acquiring the real size of the wire rod material to be measured and further enhance the measuring accuracy of the diameter measuring instrument. In addition, since the light sources are disposed on a rotary movement component, i.e. rotary chassis, adopting larger sized reflective mirror will take up the arrangement of other parts and components, and to gain sufficient accuracy for the larger sized reflection mirror will remarkably increase the cost. The solution provided by the present invention is that adopting a reasonable combination of two reflective sheet to provide large region of illuminated scope, namely, the illuminated region created by collimated parallel beams superimposed in the radial direction of the wire rod material is larger than the radial region of the parallel beam emanated from the one of the individual reflective sheets, which not only solves the spatial arrangement problem of the components and remarkably lowers the product cost, but also reliably ensures both the mirror quality and the accuracy.

### Brief description of drawings

Figure 1 is a schematic structural diagram of the present invention.
Figure 2 is a stereoscopic schematic structural diagram of the reflective mirror.

### Description of embodiments

To facilitate description, the basic structure and principles of the diameter measuring instrument are first briefly described as follows: the diameter measuring instrument comprises a housing 1 provided with a bearing for rotarily supporting the rotating of the rotary chassis 2 and a drive mechanism for driving the rotary chassis 2 to rotate, and the drive mechanism can provide the torque by a motor. The rotary chassis 2 is provided with a light source apparatus and an imaging apparatus mainly comprising CCD cameras. When the rotary chassis 2 is rotated, the parallel beam emanated from the light source collimating lens 20 is always pointing to the wire rod material to be measured, so that when the wire rod material to be measured passes through the region illuminated by the parallel beam, due to the light blocked casting a shadow, a dark area reflecting the size of the object to be measured appears in the high-resolution linear array CCD camera 4 which send the collected signal to the CPU, after calculation process, the signal is converted to the actual diameter parameter of the object to be measured.

The present invention is designed for providing the above-mentioned parallel beams, to enhance and ensure the measuring accuracy and reliability. Hereinafter further description will be made by incorporating figures to illustrate the present invention.

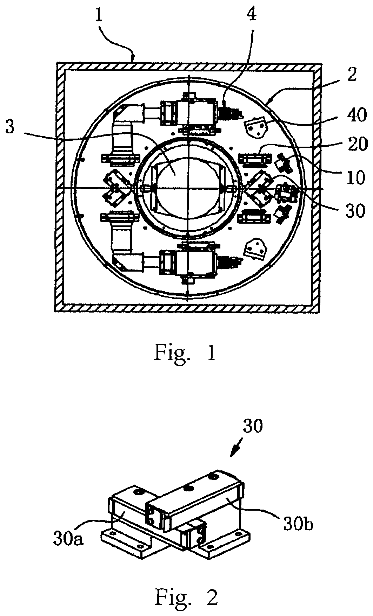

As shown in Figs. 1, 2, a through-hole 3 is provided on a rotary chassis 2 which is disposed in a housing 1 and which is driven to rotate by a driving mechanism, for wire rod material to pass through; two collimated parallel beams are respectively incident upon the two reflective sheets 30a, 30b of the reflective mirror 30, and the collimated parallel beams emanated from the two reflective sheets 30a, 30b are incident upon the wire rod material to be measured, which is passed through the middle of the through-hole 3; the illuminated region created by superimposing the collimated parallel beams emanated from the two reflective sheets 30a, 30b in the radial direction of the wire rod material is larger than the illuminated region created by a parallel beam in the radial direction emanated from only one of the two individual reflective sheets 30a, 30b.

The preferred and detailed solution is: the parallel beam reflected by the reflective mirror 30 is perpendicular to the progressing direction of the wire rod material to be measured, and the illuminated region of the beam in radial direction is larger than the diameter of the wire rod material to be measured.

The parallel beams reflected by the two reflective sheet 30a, 30b mentioned above superimposed in the direction of the wire rod material to be measured, the scope of the radial region created by the beams illuminated on the wire rod material to be measured almost doubles, ensuring the measuring of large diameter materials. Thus, optical components of small sizes can be selected for completing the measuring of large size materials, meanwhile lowering the product cost remarkably, and additionally facilitating the symmetrical arrangement of elements and components to satisfy the requirement for balancing.

The reflective mirror 30 comprises two reflective sheets 30a, 30b, the reflective sheets 30a, 30b being rectangular reflective surfaces and the reflected light being directed to the position of the wire rod material to be measured, two reflective sheets 30a, 30b having shorter sides thereof on one end coming close and cross arranged, and both the reflective surfaces are parallel to the progressing direction of the wire rod material to be measured; each of the two reflective sheets 30a, 30b is arranged with one pair of light source collimating lens 20 and LED light source lamp 10, the light source collimating lens 20 is arranged with a reflective light mirror 40 and reflective mirror 30 respectively at light inlet side and outlet side, the LED light source lamp 10 is located outside the light source collimating lens 20 near the disc edge of the rotary chassis 2, the LED light source lamp 10 points to the reflective light mirror 40. Reflective light mirror 40 is provided on the disc of the rotary chassis 2 at the light inlet side of the light source collimating lens 20. The LED light source lamp 10 points to the reflective light mirror 40 to shorten the optical light path by the reflective light mirror 40, thereby reducing the light path system space of the collimating light source. The light collimating lens 20 acts to collimate the light emitted by the LED light source into a parallel beam.

Reflective mirror 30 is provided on the disc of the rotary chassis 2 at the light outlet side of the light source collimating lens 20. The parallel beam reflected by the reflective mirror 30 points to the wire rod material to be measured that is passed through the through hole 3, specifically, that is, the parallel beam emitted from the light source collimating lens 20 is turned by 90 degrees of angle by the reflective mirror 30, to then illuminate on the object to be measured.

As shown in Fig. 1, the light is provided by the LED light source lamp 10, which is incident to the reflective mirror 30 via reflective light mirror 40 and the light source collimating lens 20, during which the light deviates from direction of the light reflected by the reflective mirror 30, that is to say, at the light source side, only the light reflected by the reflective mirror 30 directly points to the position of the object to be measured, and the remaining light all deviates from the position of the object to be measured and stays in the farthest deviation position, ensuring the unity of the imaging light source to the limits, thus to avoid other light pointing to the object to be measured to interfere with the imaging results, so as to guarantee the imaging quality.

In addition, the telecentric imaging optical path requires a large depth of field, so the numerical aperture of the beam needs to be small. Because telecentric imaging optical path requires telecentric illumination light path, a small numerical aperture of the illumination beam requires a collimating lens with a long focal length. With the limitation of the volume of the diameter measuring instrument, the present invention utilizes reflective light mirror 40 and reflective mirror 30 to reflect twice to shorten the light path, thereby reducing the light path system space of the collimating light source.

Color difference exists between the color of the parallel beam and the color of the wire rod material to be measured for easy identification. The preferred solution is the LED light source lamp 10 choosing light source color less than 600nm wavelength, preferably blue light source, which can avoid the infrared interference emitted from hot objects, thereby facilitating the identification and processing of the imaging.

As shown in Fig. 1, 2, two reflective sheets 30a, 30b have cross symmetrical cross-shaped arrangement formed at the shorter sides of one end, angular bisector of the both being directed to the center of the through-hole 3, thereby ensuring the central part of the wire rod material to be measured also stay within the imaging region scope so as to acquire the complete information of the wire rod material to be measured.

Incorporating Fig. 2, the reflective mirror 30 comprises two mutually collimating plane reflective lens sheet, namely, reflective sheets 30a, 30b, which are mounted on the circular rotary chassis 2, the two reflective sheets 30a, 30b (hereinafter referred to as vertical direction) have an up-down distribution in vertical direction. When being mounted in practice, the shorter sides of the two reflective sheets 30a, 30b maintain perpendicular with respect to the disc of the rotary chassis 2. An optical path inlet reflective mirror of two reflective sheets 30a, 30b turns two opposite parallel beams emanated from the light source collimating lens 20 by 90 degrees, into a parallel beam in the same direction after radially superimposed to illuminate on the object to be measured, thereby providing light source for imaging measurement.

## Claims

1. A light source apparatus of diameter measuring instrument, comprising:
a housing (1), a rotary chassis (2) and a driving mechanism, wherein the driving mechanism is arranged to rotate the rotary chassis (2), wherein a through-hole (3) for wire rod material to pass through is provided on the rotary chassis (2) which is rotarily supported in the housing (1);
a pair of light source collimating lenses (20) and light source lamps (10), which are disposed on the rotary chassis (2) and configured to generate two collimated parallel beams; and
a reflective mirror (30) having two reflective sheets (30a, 30b) disposed on the rotary chassis (2), wherein the two collimated parallel beams are respectively incident upon the two reflective sheets (30a, 30b) of the reflective mirror (30), and the collimated parallel beams emanated from the two reflective sheets (30a, 30b) are incident
upon the wire od material to be measured, which is
passed in use, through the middle of the through-hole (3); wherein an illuminated region created by superimposing the collimated parallel beams emanated from the two reflective sheets (30a, 30b) in a radial direction of the wire rod material is larger than an illuminated region created by a parallel beam emanated from only one of the two individual reflective sheets (30a, 30b) in the radial direction.

2. The light source apparatus of diameter measuring instrument according to claim 1, **characterized in that**, the reflective mirror (30) comprises two reflective sheets (30a, 30b), the reflective sheets (30a, 30b) being rectangular reflective surfaces and the reflected light being directed to the position of the wire rod material to be measured, two reflective sheets (30a, 30b) having shorter sides thereof on one end coming close and cross arranged and the reflective surfaces of the two being parallel to the progressing direction of the wire rod material to be measured; each of the two reflective sheets (30a, 30b) is arranged with one pair of light source collimating lens (20) and LED light source lamp (10), the light source collimating lens (20) is arranged with a reflective light mirror (40) and reflective mirror (30) respectively at light inlet side and outlet side, the LED light source lamp (10) is located outside the light source collimating lens (20) near the disc edge of the rotary chassis (2), the LED light source lamp (10) points to the reflective light mirror (40).

3. The light source apparatus of diameter measuring instrument according to claim 1, **characterized in that**, color difference exists between the color of the parallel beam and the color of the wire rod material to be measured for easy identification.

4. The light source apparatus of diameter measuring instrument according to claim 3, **characterized in that**, the LED light source lamp (10) chooses light source color less than 600nm wavelength, preferably blue light.

5. The light source apparatus of diameter measuring instrument according to claim 2, **characterized in that**, said two reflective sheets (30a, 30b) have cross symmetrical cross-shaped arrangement formed at the shorter sides of one end, bisector point of the both being directed to the center of the through-hole (3).

6. The light source apparatus of diameter measuring instrument according to claim 5, **characterized in that**, two reflective sheets (30a, 30b) are mounted on the circular rotary chassis (2), two reflective sheets (30a, 30b) having mirror surfaces thereof perpendicular to each other and in up-down distribution, an optical path inlet reflective mirror of two reflective sheets (30a), (30b) turns two opposite parallel beams emanated from the light source collimating lens (20) by 90 degrees respectively, into a parallel beam in the same direction after radially superimposed to illuminate on the object to be measured.

## Patentansprüche

1. Lichtquellenvorrichtung eines Durchmessermessinstruments, umfassend:
ein Gehäuse (1), ein Drehgestell (2) und einen Antriebsmechanismus, wobei der Antriebsmechanismus angeordnet ist, um das Drehgestell (2) zu drehen,
wobei ein
Durchgangsloch (3) zum Durchführen von Drahtstabmaterial an dem Drehgestell (2) bereitgestellt ist, das in dem Gehäuse (1) drehend unterstützt wird;
ein Paar Lichtquellenkollimatorlinsen (20) und Lichtquellenlampen (10), die auf dem Drehgestell (2) angeordnet und konfiguriert sind, um zwei kollimierte parallele Strahlen zu erzeugen; und
einen reflektierenden Spiegel (30), der zwei reflektierende Blätter (30a, 30b) aufweist, die auf dem Drehgestell (2) angeordnet sind, wobei die zwei kollimierten parallelen Strahlen jeweils auf die zwei reflektierenden Blätter (30a, 30b) des reflektierenden Spiegels (30) fallen, und die kollimierten parallelen Strahlen, die von den zwei reflektierenden Blättern (30a, 30b) ausgehen, auf das zu messende Drahtstabmaterial fallen, das bei Gebrauch durch die Mitte des Durchgangslochs (3) geführt wird; wobei ein beleuchteter Bereich, der durch Überlagerung der kollimierten parallelen Strahlen erzeugt wird, die von den zwei reflektierenden Blättern (30a, 30b) in einer radialen Richtung des Drahtstabmaterials ausgehen, größer ist als der beleuchtete Bereich, der durch einen parallelen Strahl erzeugt wird, der von nur einem der zwei einzelnen reflektierenden Blätter (30a, 30b) in radialer Richtung ausgeht.

2. Lichtquellenvorrichtung eines Durchmessermessinstruments nach Anspruch 1, **dadurch gekennzeichnet, dass** der reflektierende Spiegel (30) zwei reflektierende Blätter (30a, 30b) umfasst, wobei es sich bei den reflektierenden Blättern (30a, 30b) um rechteckige reflektierende Flächen handelt und das reflektierte Licht zu der Position des zu messenden Drahtstabmaterials gerichtet wird, wobei zwei reflektierende Blätter (30a, 30b) an einem Ende kürzere Seiten aufweisen, die sich nahe kommen und quer angeordnet sind, und die reflektierenden Flächen der beiden parallel zur fortlaufenden Richtung des zu messenden Drahtstabmaterials sind; wobei jedes der zwei reflektierenden Blätter (30a, 30b) mit einem Paar aus einer Lichtquellenkollimatorlinse (20) und einer LED-Lichtquellenlampe (10) angeordnet ist, wobei die Lichtquellenkollimatorlinse (20) mit einem reflektierenden Lichtspiegel (40) und einem reflektierenden Spiegel (30) an der Eintritts- bzw. Austrittsstelle des Lichts angeordnet ist, wobei sich die LED-Lichtquellenlampe (10) außerhalb der Lichtquellenkollimatorlinse (20) nahe des Scheibenrands des Drehgestells (2) befindet, wobei die LED-Lichtquellenlampe (10) zu dem reflektierenden Lichtspiegel (40) zeigt.

3. Lichtquellenvorrichtung eines Durchmessermessinstruments nach Anspruch 1, **dadurch gekennzeichnet, dass** zwischen der Farbe des parallelen Strahls und der Farbe des zu messenden Drahtmaterialmaterials zur leichten Identifizierung ein Farbunterschied besteht.

4. Lichtquellenvorrichtung eines Durchmessermessinstruments nach Anspruch 3, **dadurch gekennzeichnet, dass** die LED-Lichtquellenlampe (10) eine Lichtquellenfarbe mit einer Wellenlänge von unter 600 nm, vorzugsweise blaues Licht, wählt.

5. Lichtquellenvorrichtung eines Durchmessermessinstruments nach Anspruch 2, **dadurch gekennzeichnet, dass** die zwei reflektierenden Blätter (30a, 30b) eine kreuzsymmetrische kreuzförmige Anordnung aufweisen, die an den kürzeren Seiten eines Endes ausgebildet ist, wobei der Halbierungspunkt der beiden zum Zentrum des Durchgangslochs (3) gerichtet ist.

6. Lichtquellenvorrichtung eines Durchmessermessinstruments nach Anspruch 5, **dadurch gekennzeichnet, dass** zwei reflektierende Blätter (30a, 30b) auf dem kreisförmigen Drehgestell (2) angebracht sind, wobei zwei reflektierende Blätter (30a, 30b) senkrecht zu einander und in Aufwärts-Abwärts-Verteilung Spiegelflächen aufweisen, wobei ein reflektierender Spiegel in dem Eingang des optischen Wegs zweier reflektierender Blätter (30a), (30b) zwei entgegengesetzte parallele Strahlen, die von der Lichtquellenkollimatorlinse (20) ausgehen, jeweils um 90 Grad zu einem parallelen Strahl in die gleiche Richtung drehen, nachdem sie radial überlagert worden sind, um den zu messenden Gegenstand zu beleuchten.

## Revendications

1. Appareil du type source lumineuse d'un instrument de mesure de diamètre, comprenant:
un logement (1), un châssis rotatif (2) et un mécanisme d'entraînement,
dans lequel le mécanisme d'entraînement est agencé pour faire tourner le châssis rotatif (2),
dans lequel un trou traversant (3) destiné au passage d'un matériau du type fil machine est prévu sur le châssis rotatif (2) qui est soutenu de manière rotative dans le logement (1) ;
une paire de lentilles collimatrices de source lumineuse (20) et de lampes de source lumineuse (10), qui sont disposées sur le châssis rotatif (2) et configurées pour générer deux faisceaux parallèles collimatés ; et
un miroir réfléchissant (30) comportant deux éléments réfléchissants (30a, 30b) disposé sur le châssis rotatif (2), dans lequel les deux faisceaux parallèles collimatés sont respectivement incidents sur les deux éléments réfléchissants (30a, 30b) du miroir réfléchissant (30), et les faisceaux parallèles collimatés provenant des deux éléments réfléchissants (30a, 30b) sont incidents sur le matériau du type fil machine devant être mesuré, qui est passé, en utilisation, à travers le milieu du trou traversant (3) ; dans lequel une région éclairée créée par superposition des faisceaux parallèles collimatés provenant des deux éléments réfléchissants (30a, 30b) dans une direction radiale du matériau du type fil machine est plus étendue qu'une région éclairée créée par un faisceau parallèle provenant de seulement l'un des deux éléments réfléchissants (30a, 30b) individuels dans la direction radiale.

2. Appareil du type source lumineuse d'un instrument de mesure de diamètre selon la revendication 1, **caractérisé en ce que** le miroir réfléchissant (30) comprend deux éléments réfléchissants (30a, 30b), les éléments réfléchissants (30a, 30b) étant des surfaces réfléchissantes rectangulaires et la lumière réfléchie étant dirigée vers la position du matériau du type fil machine devant être mesuré, deux éléments réfléchissants (30a, 30b) comportant des côtés plus courts de ceux-ci à une extrémité s'approchant et se croisant et les surfaces réfléchissantes des deux étant parallèles à la direction de progression du matériau du type fil machine devant être mesuré ; chacun des deux éléments réfléchissants (30a, 30b) est agencé avec une paire de lentille collimatrice de source lumineuse (20) et de lampe de source lumineuse DEL (10), la lentille collimatrice de source lumineuse (20) est agencée avec un miroir à lumière réfléchie (40) et un miroir réfléchissant (30) respectivement à un côté entrée et un côté sortie de la lumière, la lampe de source lumineuse DEL (10) est située en dehors de la lentille collimatrice de source lumineuse (20) près du bord du disque du châssis rotatif (2), la lampe de source lumineuse DEL (10) est orientée vers le miroir à lumière réfléchie (40).

3. Appareil du type source lumineuse d'un instrument de mesure de diamètre selon la revendication 1, **caractérisé en ce qu'**une différence de couleur existe entre la couleur du faisceau parallèle et la couleur du matériau du type fil machine devant être mesuré pour une identification aisée.

4. Appareil du type source lumineuse d'un instrument de mesure de diamètre selon la revendication 3, **caractérisé en ce que** la lampe de source lumineuse DEL (10) choisit une couleur de source lumineuse d'une longueur d'onde inférieure à 600 nm, de préférence une lumière bleue.

5. Appareil du type source lumineuse d'un instrument de mesure de diamètre selon la revendication 2, **caractérisé en ce que** lesdits deux éléments réfléchissants (30a, 30b) présentent un agencement cruciforme symétrique formé au niveau des côtés plus courts d'une extrémité, le point de bissection des deux étant dirigé vers le centre du trou traversant (3).

6. Appareil du type source lumineuse d'un instrument de mesure de diamètre selon la revendication 5, **caractérisé en ce que** deux éléments réfléchissants (30a, 30b) sont montés sur le châssis rotatif circulaire (2), deux éléments réfléchissants (30a, 30b) comportant des surfaces de miroir de ceux-ci perpendiculaires l'une à l'autre et selon une distribution haut-bas, un miroir réfléchissant d'entrée de chemin optique de deux éléments réfléchissants (30a), (30b) fait tourner deux faisceaux parallèles opposés provenant de la lentille collimatrice de source lumineuse (20) de 90 degrés respectivement, en un faisceau parallèle dans la même direction après superposition radiale pour éclairer l'objet devant être mesuré.
